# EUROPÄISCHE PATENTSCHRIFT

(11) **EP 0 948 576 B1**
(45) Veröffentlichungstag und Bekanntmachung des Hinweises auf die Patenterteilung: **13.06.2001**
(21) Anmeldenummer: 97951158.1
(22) Anmeldetag: 10.11.1997
(51) Int. Cl.: C09K 7/02

(54) **VERWENDUNG AUSGEWÄHLTER FETTALKOHOLE UND IHRER ABMISCHUNGEN MIT CARBONSÄUREESTERN ALS SCHMIERMITTELKOMPONENTE IN WASSERBASIERTEN BOHRSPÜLSYSTEMEN ZUM ERDREICHAUFSCHLUSS**
USE OF SELECTED FATTY ALCOHOLS AND THEIR MIXTURES WITH CARBOXYLIC ACID ESTERS AS LUBRICANT COMPONENTS IN WATER-BASED DRILLING FLUID SYSTEMS FOR SOIL EXPLORATION
UTILISATION D'ALCOOLS GRAS SELECTIONNES ET DE LEURS MELANGES AVEC DES ESTERS D'ACIDE CARBOXYLIQUE COMME CONSTITUANTS DE LUBRIFIANTS DANS DES SYSTEMES DE FLUIDE DE FORAGE A BASE D'EAU POUR EXPLORATION DE SOUS-SOLS

(30) Priorität: 18.11.1996 DE 19647598
(43) Veröffentlichungstag der Anmeldung: 13.10.1999
(73) Patentinhaber: Cognis Deutschland GmbH, 40589 Düsseldorf (DE)
(72) Erfinder: MÜLLER, Heinz, D-40789 Monheim (DE); HEROLD, Claus-Peter, D-40822 Mettmann (DE); VON TAPAVICZA, Stephan, D-40699 Erkrath (DE)
(86) Internationale Anmeldenummer: EP9706230
(87) Internationale Veröffentlichungsnummer: WO9822551

(56) Entgegenhaltungen:
- EP-A- 0 391 252
- EP-A- 0 398 112
- EP-A- 0 398 113
- EP-A- 0 770 661
- WO-A-91/19771

## Beschreibung

Die erfindungsgemäße Lehre betrifft das Gebiet der wasserbasierten Spülungssysteme, die im Rahmen des Erdreichaufschlusses durch Erbohrung insbesondere als sogenannte Spülflüssigkeiten zum Einsatz kommen. Nachfolgend wird die Erfindung anhand solcher rein wäßrigen Bohrspülflüssigkeiten und darauf aufgebauter Bohrspülschlämme beschrieben. Das Anwendungsgebiet der erfindungsgemäßen Abwandlung von Hilfsflüssigkeiten der hier betroffenen Art ist jedoch nicht darauf beschränkt. In Betracht kommen insbesondere auch entsprechende Hilfsflüssigkeiten für Probleme aus dem Bereich des differential sticking, insbesondere spotting fluids, für das work over, die Stimulierung und vergleichbare Einsatzgebiete in solchen Erdbohrungen.

Die einschlägige Technologie des geologischen Aufschlusses von beispielsweise Erdöl- und/oder Erdgasvorkommen unterscheidet drei Grundtypen der hier in der Praxis zum Einsatz kommenden Hilfsflüssigkeiten, insbesondere entsprechender Bohrschlämme: Ölbasierte Systeme, die in der Regel eine geschlossene Ölphase in Abmischung mit einer dispersen Wasserphase im Sinne der sogenannten W/O-Invert-Spülungen aufweisen, wasserbasierte Öl/Wasser-Systeme, in denen die wäßrige Phase mit ihren gelösten und dispergierten Hilfsstoffen die geschlossene Phase bildet und die Ölphase darin fein emulgiert verteilt ist sowie schließlich die Klasse der rein wasserbasierten Bohrspülungen.

Diese zuletzt genannte Klasse der rein wasserbasierten Spülsysteme reicht in der geschichtlichen Entwicklung der hier betroffenen Arbeitsmittel am weitesten in die Vergangenheit zurück. Ihr Einsatz ist jedoch mit so ausgeprägten Defiziten verbunden, daß bis heute nur eine beschränkte Anwendbarkeit möglich ist. Insbesondere die Interaktion der wäßrigen Bohrspülflüssigkeit mit zu erbohrenden wassersensitiven Erdreichschichten - insbesondere entsprechenden Tonschichten - führt zu nicht akzeptablen Belastungen des Bohrprozesses.

In jüngster Vergangenheit wird allerdings ein älterer Vorschlag wieder aufgegriffen, der auch in hoch sensitiven shale-Formationen zu hinreichender Stabilität bei Einsatz rein wasserbasierter Spülsysteme führen kann. Hierbei handelt es sich um den Einsatz entsprechender Systeme auf Basis löslicher Alkalisilikate, die auch als Wassergläser beziehungsweise Wasserglas-basierte Systeme bekannt sind. Verwiesen wird beispielsweise auf die der Öffentlichkeit zugängliche Vortragsveranstaltung "THE PREVENTION OF OIL DISCHARGE FROM DRILLING OPERATIONS", 18./19. Juni 1996, Aberdeen, veranstaltet von IBC Technical Services, London, sowie insbesondere auf die in diesem Zusammenhang erschienenen Veröffentlichungen M. Eigner "FIELD TRIALS WITH A SILICATE DRILLING FLUID IN SHELL-EXPRO", sowie I. WARD und B. Williamson "SILICATE WATER BASED MUDS - A SIGNIFICANT ADVANCE IN WATER BASED DRILLING FLUID TECHNOLOGY". EP-A-0 398 112 beschreibt der Einsatz oleophiler Alkohole in Bohrspülsystemen auf Bentonitbasis.

Das Arbeiten mit rein wasserbasierten Systemen insbesondere der zuletzt genannten Art macht allerdings die Mitverwendung von Komponenten mit Schmiermittelwirkung wünschenswert. Auf das einschlägige Fachwissen kann hier verwiesen werden. Es ist bekannt, daß Carbonsäureestern zum Zweck des Erdreichaufschlusses eine besonders ausgeprägte Schmiermittelwirkung zukommt, von der in vielfacher Weise Gebrauch gemacht wird. Ihr Einsatz in wasserbasierten Systemen und insbesondere in vergleichsweise hochalkalischen Wasserglassystemen kann jedoch zu beträchtlichen Schwierigkeiten führen. Durch Esterspaltung können als Sekundärprodukte Komponenten mit starker Tendenz zur Schaumbildung entstehen, die dann unerwünschte Probleme in das Spülsysteme einführen. Die zuvor erwähnte Veröffentlichung von I. Ward et al. verweist ausdrücklich auf diese hier bestehende Schwierigkeit.

Die erfindungsgemäße Lehre geht von der Aufgabe aus, Schmiermittel für wasserbasierte Spülungen und insbesondere für Silikat-haltige Wasserglasspülungen dieser Art mit hohem pH-Wert zur Verfügung zu stellen, die wenigstens anteilsweise Hydrolyse-stabil sind, gleichzeitig aber gewünschtenfalls die Mitverwendung auch gerade von Carbonsäureestern ermöglichen und dann durch eine ausgesprochen schaumdämpfende Wirkung Negativeffekte einer potentiellen Hydrolyse ausschließen.

### Gegenstand der Erfindung

Gegenstand der Erfindung ist die Verwendung ausgewählter geradkettiger und/oder verzweigter Fettalkohole mit wenigstens 12 C-Atomen im Molekül und die Verwendung von Abmischungen dieser Fettalkohole mit Carbonsäureestern als Zusatz mit Schmiermittelwirkung in wasserbasierten Alkalisilikat-Bohrspülsystemen für deren Einsatz beim Erdreichaufschluß durch Erbohrung.

Die Erfindung betrifft dabei insbesondere die Verwendung dieser Fettalkohol-basierten Schmiermittel als Zusatz in wasserbasierten Alkalisilikat-Spülungen.

### Einzelheiten zur erfindungsgemäßen Lehre

Im Rahmen der Entwicklungsarbeiten für neue wasserbasierte Spülungssysteme zeigte sich, daß speziellen Alkoholen gute Schmiereigenschaften in solchen wasserbasierten Systeme zukommen. Fettalkohole der erfindungsgemäß betroffenen Art haben zusätzlich den Vorteil, das sie auch in hochalkalischen wäßrigen Systemen stabil sind. Sie wurden dementsprechend insbesondere auch in modernen Silikatspülungen (Wasserglassysteme) überprüft.

Überraschend stellte sich hier heraus, daß bestimmten, im nachfolgenden im einzelnen geschilderten Fettalkoholen der erfindungsgemäßen Art ausgesprochen gute Schmiereigenschaften zuzuordnen sind, auch wenn sie in anderen, Tone enthaltenden wasserbasierten Spülungen keine besonders ausgeprägt auffallende Schmiermittelwirkung zeigen.

Die der Erfindung zugrundeliegenden positiven Wirkungen der ausgewählten Hilfsstoffe auf Fettalkoholbasis können dadurch noch weiter gesteigert werden, daß diese Fettalkohole zusammen mit Carbonsäureestern guter Schmierfähigkeit eingesetzt werden. Auch hierzu werden nachfolgend weiterführende Angaben gemacht. Auffallend ist, daß trotz der hier zu erwartenden partiellen Esterspaltung und der damit theoretisch bestehenden Gefahr einer Steigerung der Schaumbildungstendenz unerwünschte Effekte in dieser Richtung ausbleiben. Offensichtlich ist die Entschäumerwirkung der erfindungsgemäß zwingend mitverwendeten Fettalkohole in ihrer innigen Abmischung mit den Estern so stark, daß hier von dem angestrebten Vorteil der gesteigerten Schmierwirkung Gebrauch gemacht werden kann, ohne Nachteile in ansteigender Schaumbildung im praktischen Betrieb in Kauf nehmen zu müssen. Bestimmt ausgewählte Ester - s. dazu die nachfolgende Offenbarung - geben auch als Hydrolyse-Produkte spezielle Effekte im Sinne der erfindungsgemäßen Zielsetzung.

Im nachfolgenden werden zunächst die erfindungsgemäß einzusetzenden Fettalkohole in breiter und in bevorzugten Definitionen beschrieben, anschließend werden entsprechende Aussagen zu erfindungsgemäß geeigneten und insbesondere bevorzugten Ester-Mischkomponenten gemacht.

Der Begriff der Fettalkohole beschreibt bekanntlich monofunktionelle Alkohole mit vergleichsweise langen Kohlenwasserstoffketten, die ihrerseits geradkettig und/oder verzweigt sein können. Geeignet sind insbesondere entsprechende Fettalkohole des Bereichs von C₁₂₋₃₀, wobei wiederum bevorzugt Fettalkohole des Bereichs der Kohlenstoffketten von C₁₂₋₂₄ für den erfindungsgemäßen Einsatz in Betracht kommen.

Die Fettalkohole können dabei natürlichen und/oder synthetischen Ursprungs sein. Fettalkohole natürlichen Ursprungs werden bekanntlich aus den entsprechenden Fettsäuren durch Reduktion der endständigen Carboxylgruppe zur Alkoholgruppe erhalten. Dabei liegen die Fettsäuren natürlichen Ursprungs im hier betroffenen Bereich der Kohlenstoffkettenlänge in der Regel als Gemische von aliphatisch gesättigten und/oder olefinisch ungesättigten Säuren vor. Im Bereich der olefinisch ungesättigten Säuren mit wenigstens 14 - 16 C-Atomen im Molekül sind - je nach Naturstoffquelle - unterschiedliche Anteile von olefinisch einfach- und/oder mehrfach ungesättigten Verbindungen vorgegeben. Durch geeignete Wahl der Reduktionsbedingungen gelingt die wenigstens weitgehend spezifische Reduktion der Carboxylgruppe unter Erhalt der olefinischen Doppelbindungen im Gerüst der Kohlenstoffkette, so daß entsprechend 1- und/oder mehrfach ungesättigte Fettalkohole, beispielsweise des Bereichs von C₁₆₋₂₄ und insbesondere des Bereichs von C_{16/18}, zur Verfügung stehen. Zum einschlägigen Fachwissen wird beispielsweise verwiesen auf die in Buchform erschienene Veröffentlichung der Anmelderin "Fettalkohole, Rohstoffe, Verfahren und Verwendung" mit ihren ausführlichen Angaben zu technischen Verfahren zur Herstellung von Fettalkoholen, zu Analytik und Kennzahlen von Fettalkoholen und zu den physikalisch-chemischen Eigenschaften dieser Fettalkohole natürlichen Ursprungs. Für den Einsatz im erfindungsgemäßen Rahmen eignen sich hier als Fettalkoholkomponente insbesondere geradkettige olefinisch ungesättigte Fettalkohole des Bereichs C_{16/18} beziehungsweise Gemische von Fettalkoholen, die zum wenigstens überwiegenden Anteil durch solche Komponenten gebildet sind. Im Bereich der Raumtemperatur fließfähigen Systemen der hier betroffenen Art kann besondere Bedeutung zukommen, auch wenn die Erfindung nicht darauf eingeschränkt ist. Entsprechende Handelsprodukte werden von der Anmelderin unter den geschützten Bezeichnungen "HD-OCENOLE" vertrieben.

Fettalkohole mit verzweigter Kohlenstoffkette sind entweder auf rein synthetischem -Wege, z.B. unter Einschluß einer Oligomerisation von niederen ethylenisch ungesättigten Kohlenwasserstoffen, zugänglich oder aber auch durch Dimerisierung von Alkoholen natürlichen Ursprungs unter Bildung der verzweigten Fettalkohole vom Guerbet-Typ. Die Kondensation vergleichsweise niedrigerer primärer Alkohole durch Erhitzen in Gegenwart von Alkali, z.B. Kaliumhydroxid oder Kaliumalkoholat, führt bei Temperaturen von 200 bis 300°C zu in 2-Stellung zur Hydroxylgruppe verzweigten Guerbet-Alkoholen. Auch hierzu kann auf die zuvor erwähnte Veröffentlichung der Anmelderin "Fettalkohole ..." verwiesen werden.

Im Rahmen der erfindungsgemäßen Aufgabenstellung hat sich gezeigt, daß diesen Guerbet-Alkoholen und insbesondere entsprechenden Alkoholen des Bereichs von C₁₂₋₂₀ ausgeprägte Wirkung im Sinne der erfindungsgemäßen Zielvorstellung zukommen kann. Besonders wichtige Guerbet-Alkohole sind solche des Bereiches C₁₆₋₂₀. Verzweigte Fettalkohole dieser Art sind konstitutionsbedingt bei Raumtemperatur fließfähig und besitzen in der Regel Stockpunkte unterhalb 0°C.

Zusammenfassend kann damit zu der Fettalkoholkomponente im Sinne der erfindungsgemäßen Lehre gesagt werden: Besonders bevorzugt sind einerseits olefinisch ungesättigte Alkohole, insbesondere des Bereichs C_{16/18} von der Art der unter dem Handelsnamen "HD-OCENOLE" vertriebenen Art. Insbesondere sind hier Oleylalkohol-basierte Fettalkohole beziehungsweise Fettalkoholgemische bevorzugt. Auf der anderen Seite sind Guerbet-Alkohole des Bereichs C₁₆₋₂₀ und insbesondere C_{16/18} besonders wichtige Hilfsstoffe im Sinne der Erfindung. Vor allen Dingen gilt das für den heute wieder angestrebten Einsatz in hochalkalischen Wasserglas-basierten Silikatspülungen.

Die Erfindung sieht den Einsatz dieser Fettalkohole als alleinige Zusatzkomponente zu den wasserbasierten Spülungssystemen vor. In einer bevorzugten Ausführungsform werden sie aber wie zuvor angegeben in Abmischung mit Carbonsäureestern eingesetzt. Carbonsäureester unterschiedlichster Art können in an sich bekannter Weise Einfluß auf eine Verbesserung der Schmierfähigkeit in insbesondere wasserbasierten Bohrspülschlämmen nehmen. Auf das allgemeine Fachwissen kann insoweit verwiesen werden. Aus dem jüngeren druckschriftlichen Stand der Technik sei beispielsweise verwiesen auf die EP 0 713 909.

Als Mischkomponente für die erfindungsgemäß definierten Fettalkohole kommen damit grundsätzlich Ester aus 1- und/oder mehrwertigen Carbonsäuren und 1- und/oder mehrwertigen Alkoholen in Betracht. Dabei ist eine bevorzugte Klasse solcher Ester auf entsprechenden Umsetzungsprodukten von geradkettigen, gegebenenfalls olefinisch ungesättigten und/oder verzweigten Monocarbonsäuren des Fettbereichs aufgebaut. Bevorzugte Säurekomponenten dieser Esterklasse haben in ihrem Säurerest entsprechende Kohlenwasserstoffreste des Bereichs C₁₂₋₂₄ und insbesondere des Bereichs C₁₄₋₂₀.

Wie zuvor schon im Zusammenhang mit den Fettalkoholen ausgeführt, kann es auch hier bei den Estern wünschenswert sein, im Bereich der Raumtemperatur fließfähige Komponenten einzusetzen. In an sich bekannter Weise ist dieser bevorzugte Stoffparameter auch gerade bei den Estern langkettiger Fettsäuren dadurch einstellbar und regulierbar, daß in der Kohlenwasserstoffkette olefinische Doppelbindungen in hinreichendem Ausmaße vorgesehen sind, und/oder daß die Kohlenwasserstoffketten verzweigte Struktur aufweisen. In Betracht kommen damit entsprechende Ester von Fettsäuren natürlichen und/oder synthetischen Ursprungs, die den zuvor angegebenen Parametern entsprechen.

Die esterbildenden Alkoholkomponenten können einfunktionell und/oder mehrfunktionell sein. Im Bereich der monofunktionellen, esterbildenden Alkohole kommt wiederum entsprechenden Fettalkoholen besondere Bedeutung zu. Hier gelten für die allgemeinen und bevorzugten Angaben die zuvor im Zusammenhang mit der Fettalkoholkomponente gemachten speziellen Definitionen. Besonders geeignet sind also Ester von Fettalkoholen des Bereichs C₁₂₋₂₄ und insbesondere des Bereichs C₁₄₋₂₀. Auch hier kann einfach und/oder mehrfach olefinisch ungesättigten Fettalkoholen wiederum besondere Bedeutung zukommen. Die zuvor gebrachten Angaben zu den von der Anmelderin unter dem Handelsnamen "HD-OCENOLE" vertriebenen Produkte gelten hier sinngemäß.

Es leuchtet in diesem Zusammenhang sofort ein: Ester, die nicht nur im Fettsäurerest sondern auch im Alkoholrest entsprechende langkettige Kohlenwasserstoffreste aufweisen, zeichnen sich durch eine besonders gute und wirkungsverstärkende Schmierwirkung aus. Darüber hinaus wandeln sich Ester der hier diskutierten Art durch Partialhydrolyse in die eingangs geschilderte essentielle Wirkstoffkomponente der erfindungsgemäß eingesetzten Schmiermittel um. Neben den freiwerdenden Fettsäuren, die in den üblicherweise basisch eingestellten wäßrigen Spülsystemen in ihre Salze umgewandelt werden, entstehen die freien Fettalkohole und damit die essentielle Schmiermittelkomponente im Sinne der erfindungsgemäßen Lehre. Ein typischer Vertreter dieser Art ist beispielsweise das Oleyloleat, ein weiteres Beispiel ist mit dem Isotridecylstearat gegeben.

Grundsätzlich können allerdings auch Ester von Alkoholen kürzerer C-Kette zum Einsatz kommen, z.B. Fettsäureester des angegebenen Bereichs der Kohlenstoffzahlen mit monofunktionellen Alkoholen mit wenigstens 4 C-Atomen, vorzugsweise wenigstens 6 bis 8 C-Atomen. Esteröle dieser Art sind heute in großtechnischem Umfang eingesetzte alternative Ölphasen für den Einsatz im Bereich der ölbasierten Spülsysteme. Zur einschlägigen Literatur wird verwiesen auf die entsprechenden europäischen Schutzrechte der Anmelderin gem. EP 0 374 671, EP 0 374 672, EP 0 386 638, EP 0 386 636 aber auch EP 0 535 074, in der insbesondere geeignete Polycarbonsäureester für den Einsatz im Rahmen von öl- und/oder wasserbasierten Bohrspülungen beschrieben werden. Weiterführende Angaben zu oleophilen Alkoholen in Bohrspülsystemen finden sich in den EP 0 391 252 und EP 0 472 558.

Geeignete Esterkomponenten sind aber auch entsprechende Verbindungen von insbesondere niederen mehrwertigen Alkoholen, beispielsweise von der Art des Glykols, des Glycerins, des Trimethylolpropans und niederer Alkohole mit insbesondere bis zu 6 C-Atomen und einer entsprechenden Anzahl von Hydroxylgruppen. Als Beispiele seien hier genannt Ester beziehungsweise Partialester von Glykosen beziehungsweise niederen Alkylglykosiden mit insbesondere Fettsäuren der zuvor definierten Strukturen. Bevorzugte mehrwertige Alkohole enthalten dementsprechend bis zu 6 C-Atomen und bis zu 6 Hydroxylgruppen im Molekül. Besondere Bedeutung kann im Rahmen der mehrwertigen Alkohole Triglyceriden und dabei wiederum entsprechenden Triglyceriden natürlichen Ursprungs zukommen. Sie haben sich als wirkungsvolle Mischkomponenten zur Abmischung mit den eingangs definierten Fettalkoholen geradkettiger und/oder verzweigter Struktur erwiesen.

Fettalkohol-basierte Schmiermittel beziehungsweise entsprechende Schmiermittelsysteme im Sinne der zuvor gegebenen Definition liegen in den wasserbasierten Bohrspülungen im allgemeinen in Mengen von höchstens 10 Gew.-% vor, bevorzugt sind Einsatzmengen die deutlich darunter liegen. Bevorzugte Grenzwerte liegen bei beziehungsweise unterhalb etwa 5 Gew.-%, wobei wiederum einer Zusatzmenge von 0,5 bis 3 Gew.-% und dabei insbesondere 1 bis 3 Gew.-% besondere Bedeutung zukommen kann.

Für die gegebenenfalls zum Einsatz kommenden Abmischungen der geradkettigen und/oder verzweigten Fettalkohole mit Estern gilt, daß der Estergehalt dieser Abmischungen nicht mehr als etwa 80 Gew.-% und vorzugsweise nicht mehr als 60 bis 70 Gew.-% beträgt - Gew.-% jeweils bezogen auf die Summe von Fettalkohol und Ester. Besonders geeignete Abmischungen von Fettalkohol(en) und Ester(n) liegen im Bereich von etwa 25 bis 55 Gew.-% Ester - Gew.-% auch hier wieder bezogen auf die Abmischung von Fettalkohol und Ester. Abmischungen im Bereich etwa gleicher Gewichtsanteile können besonders zweckmäßig sein.

Wasserbasierte Bohrspülflüssigkeiten und die darin einzusetzenden Zusatzstoffe wie Beschwerungsmittel, fluid-loss-Additive, Alkalireserven, Viskositätsregler und dergleichen sind Gegenstand umfangreicher allgemeiner Literatur und einschlägiger Patentliteratur. Ausführliche Sachinformationen finden sich hier beispielsweise in dem Fachbuch George R. Gray und H.C.H. Darley "Composition in Properties of Oil Well Drilling Fluids", 4. Auflage, 1980/81, Gulf Publishing Company, Houston und die umfangreiche darin zitierte Sach- und Patentliteratur sowie das Handbuch "Applied Drilling Engineering", Adam T. Borgoyne, Jr. et al., First Printing Society of Petroleum Engineers, Richardson, Texas (USA). Das durch die erfindungsgemäße Lehre besonders angesprochene Gebiet der wasserbasierten Silikatspülungen ist ebenfalls allgemeines Fachwissen, vgl. insbesondere die eingangs zitierten, hierauf bezogenen Veröffentlichungen. Grundsätzlich gilt: Als Alkalisilikate kommen insbesondere wasserlösliches Natriumsilikat und/oder wasserlösliches Kaliumsilikat mit Modulwerten (Molverhältnis von SiO₂ zu Na₂O beziehungsweise K₂O) von 1,0 bis 3,3, vorzugsweise von 1,5 bis 2,5 in Betracht. Bevorzugte Konzentrationen der Alkalisilikate in den wasserbasierten Flüssigkeiten liegen bei maximal etwa 10 Gew.-%, vorzugsweise in einem etwas niedrigerem Bereich z.B. von etwa 3 bis 8 Gew.-% und insbesondere im Bereich von etwa 4 bis 7 Gew.-%. Zusammen mit den Alkalisilikaten sind üblicherweise hohe Konzentrationen löslicher nichtreaktiver Salze in den wasserbasierten Flüssigphasen vorgesehen. Insbesondere kommen hier Alkalichloride und dabei Natriumchlorid und/oder Kaliumchlorid in Betracht. Entsprechend Salz-gesättigte wäßrige Silikatspülungen sind in der Praxis bevorzugte Arbeitsmittel. Die pH-Werte dieser Flüssigphasen sind vergleichsweise im stark alkalischen Bereich und liegen oberhalb pH 10 und insbesondere bei wenigstens pH 11. Es ist diese hier geschilderte Klasse von hochalkalischen Silikatspülungen, in denen sich die erfindungsgemäßen Schmiermittel als Zusatz in geringen Mengen von beispielsweise 1 bis 3 Gew.-% - bezogen auf Gesamtspülung - als besonders wirkungsvoll erwiesen haben. Für den heute wieder interessant gewordenen technischen Einsatz dieser rein wasserbasierten Systeme kann durch die Mitverwendung geringster Mengen an organischen Komponenten, die im Sinne der Erfindung ausgewählt sind, eine substantielle Leistungssteigerung eingestellt werden, wie sie für die Mitverwendung von Komponenten mit Schmiermittelwirkung in wasserbasierten Systemen prinzipiell bekannt ist.

Es kann im Rahmen der Erfindung zweckmäßig sein, die Schmierwirkung des Zusatzes auch unter Arbeitsbedingungen extremer Druckbelastung sicherzustellen und/oder zu verbessern. Der Stand der Technik kennt für diesen Bereich der Anwendungsbedingungen eine Mehrzahl von Zusatzstoffen - die sogenannten E-P-Additive (Extreme-Pressure-Additives)-die auch im hier betroffenen Arbeitsbereich wirksam die verbesserte Schmierung sicherstellen.

Zum druckschriftlichen Stand der Technik wird verwiesen auf "Ullmann's Encyclopedia of Industrial Chemistry", 5. Edition, Volume A 15, Kapitel "Lubricants and Related Products" mit den zugehörigen Unterkapitel 7.5 "Extreme-Pressure Additives" (a.a.O., Seiten 450/1). Als eine zusätzliche Offenbarung in diesem Zusammenhang wird verwiesen auf die zitierte Literaturstelle Unterkapitel 4.4 "Phosphoric Acid Esters" a.a.O., Seite 440/1.

Beschrieben sind hier für dieses Einsatzgebiet der E-P-Lubricants zahlreiche Vertreter aus einer Mehrzahl von Stoffklassen wenigstens überwiegend organischer Struktur, Insbesondere sind benannt: P-enthaltende organische Verbindungen, z.B. aromatische und/oder aliphatische Ester - einschließlich entsprechender Partialester - von Säuren des Phosphors und/oder deren Partialsalze, z.B. entsprechende Phosphate und/oder Phosphonate; geschwefelte organische Verbindungen, in denen insbesondere polysulfidische Brückenelemente unter Einsatzbedingungen zugänglichen Schwefel für eine Belegung/Abreaktion mit Metalloberflächen anbieten, z.B. geschwefelte Kohlenwasserstoffverbindungen, geschwefelte Esteröle, entsprechende Fettalkohole, Fettsäuren und dergleichen; organische Stickstoff-Verbindungen wie Nitroaromaten, Aminophenolderivate, Ester von Carbaminsäuren, Salze organischer Basen mit organischen Säuren und schließlich organische Halogenverbindungen.

Besonders wirkungsvoll sind dabei Mehrkomponenten-Additive, in denen zwei oder mehr der hier angezogenen Stoffklassen gemischt oder in der Molekülstruktur verbunden werden. In Betracht kommen hier insbesondere entsprechende Kombinationen von Schwefel, Phosphor und/oder Stickstoff enthaltenden Zusatzstoffen.

Bei der Mitverwendung solcher Hilfsstoffe insbesondere aus der Klasse der E-P-Additive werden diese den erfindungsgemäß zuvor definierten Zusatzstoffen bzw. Stoffmischungen mit Schmiermittelcharakter üblicherweise in untergeordneten Mengen zugesetzt.

Die nachfolgenden Beispiele vergleichen die meßtechnisch ermittelten Werte für eine Reihe von Schmiermittelzusammensetzungen im Sinne der erfindungsgemäßen Lehre mit entsprechenden meßtechnischen Werten eines Blindversuches, bei dem kein Schmiermittelzusatz erfolgt ist.

Als wasserbasiertes Spülungssystem wird dabei eine - in allen Fällen identische - Zusammensetzung im Sinne einer Wasserglas-basierten Natriumsilikatspülung der nachfolgenden Zusammensetzung eingesetzt:

| | |
|---|---|
| Gesättigte wäßrige Natriumchloridlösung | 253 g |
| 40 Gew.-%ige wäßrige Lösung von Wasserglas (Natriumsilikat des Moduls ca. 2,2) | 59,4 g |
| Xanthan-Polymer | 0,4 g |
| Trockenstärke in Form eines feinteiligen Pulvers | 8,5 g |
| Wasserlösliche Aminkomponente | 1,7 g |
| Barite | 176 g |

Die zahlenmäßige Ermittlung des jeweiligen Schmiereffektes erfolgt dabei in der im Handel erhältlichen Standardvorrichtung "Reibverschleiß-Waage nach Reichert", die - zusammen mit den erforderlichen Anweisungen für Betrieb und Auswertung der Meßergebnisse erhältlich ist durch die Firma "SUR-Berlin", Sommer & Runge KG, D-1000 Berlin 48, Symeonstraße.

Die nachfolgenden Vergleichsversuche bestimmen dabei einerseits die jeweils gemessene Abriebfläche pro Versuchsansatz in mm², zusätzlich wird die sich im jeweiligen Versuch einstellende Endtemperatur der getesteten Flüssigkeitsprobe bestimmt.

Die jeweils identischen Betriebsbedingungen in allen Versuchen in der Reibverschleiß-Waage sind: 200 Lauf-Meter bei einer Belastung von 1.500 p.

Die in den nachfolgenden Beispielen gem. der Erfindung identifizierten Schmiermittelzusätze werden der wasserbasierten Testflüssigkeit auf Wasserglasbasis jeweils in einer Menge von 3 Gew.-% zugesetzt. Das Abmischungsverhältnis von Fettalkohol/Ester liegt in allen hier betroffenen Fällen bei 1/1 (Gewichtsteile). Im einzelnen gilt:
Vergleichsbeispiel:
   kein Zusatz von Schmiermitteln
Beispiel 1:
   Zusatz eines Schmiermittelgemisches von Guerbet-Alkohol C₂₀/Oleyloleat
Beispiel 2:
   Schmiermittelzusatz auf Basis eines Gemisches Oleylalkohol (in Abmischung mit untergeordneten Anteilen an Destillationsrückstand)/Oleyloleat
Beispiel 3:
   Schmiermittelzusatz auf Basis Oleylalkohol gem. Beispiel 2/Isotridecylstearat
Beispiel 4:
   Schmiermittelzusatz auf Basis Guerbet-Alkohol C₁₆/Isotridecylstearat
Beispiel 5:
   Oleylalkohol-basiertes Schmiermittel gem. Beispiel 2, jedoch ohne Zusatz von Oleyloleat

In der nachfolgenden Tabelle sind die in den jeweiligen Austestungen ermittelten Abriebswerte in mm² (Mittel aus jeweils 3-fach Bestimmungen), sowie die im jeweiligen Versuch ermittelten Endtemperaturen der Testflüssigphasen zusammengefaßt.

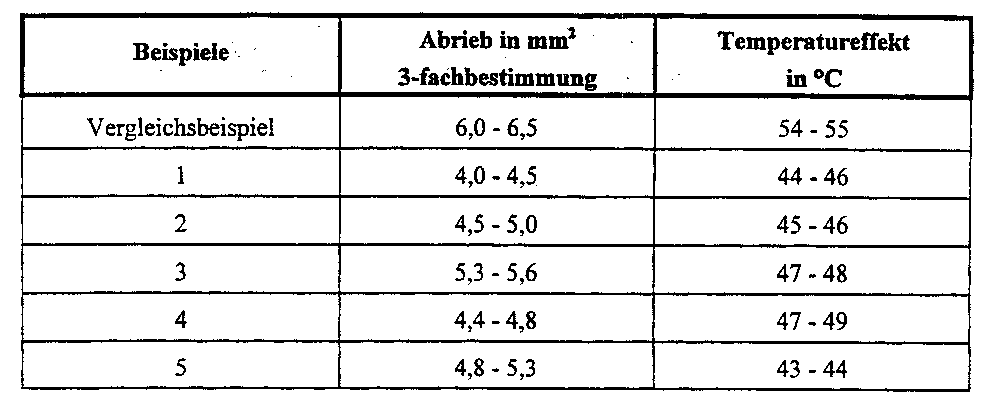

Die Schmierwirkung der erfindungsgemäßen Zusätze ist sowohl in der Verringerung der jeweils bestimmten Abriebflächen als auch in der Absenkung der jeweils bestimmten Endtemperatur der getesteten Flüssigphase zu erkennen.

## Patentansprüche

1. Verwendung geradkettiger und/oder verzweigter Fettalkohole mit wenigstens 12 C-Atomen im Molekül und ihre Abmischung mit Carbonsäureestern als Zusatz mit Schmiermittelwirkung in wasserbasierten Alkalisilikat-Bohrspülsystemen für deren Einsatz beim Erdreichaufschluß durch Erbohrung.

2. Verwendung nach Anspruch 1, dadurch gekennzeichnet, daß Fettalkohole des Bereichs von C₁₂₋ ₃₀, eingesetzt werden.

3. Verwendung nach Ansprüchen 1 bis 2, dadurch gekennzeichnet, daß olefinisch 1- und/oder mehrfach ungesättigte Fettalkohole des Bereichs C₁₆₋₂₄ und/oder Guerbet-Alkohole des Bereiches C₁₂₋₂₀ verwendet werden.

4. Verwendung nach Ansprüchen 1 bis 3, dadurch gekennzeichnet, daß im Bereich der Raumtemperatur fließfähige Fettalkohole oder entsprechend fließfähige Abmischungen von Fettalkoholen mit Carbonsäureestern eingesetzt werden.

5. Verwendung nach Ansprüchen 1 bis 4, dadurch gekennzeichnet, daß zusammen mit den Fettalkoholen Ester 1- und/oder mehrwertiger Carbonsäuren mit 1- und/oder mehrwertigen Alkoholen verwendet werden, wobei entsprechende Ester von geradkettigen, gegebenenfalls olefinisch ungesättigten Monocarbonsäuren des Fettbereichs bevorzugt sind.

6. Verwendung nach Ansprüchen 1 bis 5, dadurch gekennzeichnet, daß Abmischungen der geradkettigen und/oder verzweigten Fettalkohole mit Estem eingesetzt werden, deren Estergehalt nicht mehr als 80 Gew.-%, beträgt, bezogen auf die Summe von Fettalkohol und Ester.

7. Verwendung nach Ansprüchen 1 bis 6, dadurch gekennzeichnet, daß zusammen mit den Fettalkoholen Ester von Monocarbonsäuren des Fettbereichs mit monofunktionellen Alkoholen ebenfalls des Fettbereichs und/oder Ester dieser Fettsäuren mit niederen mehrwertigen Alkoholen mit bis zu 6 C-Atomen und bis zu 6 Hydroxylgruppen, eingesetzt werden.

8. Verwendung nach Ansprüchen 1 bis 7, dadurch gekennzeichnet, daß Stoffgemische eingesetzt werden, die zusätzlich Additive für den Anwendungsbereich extremen Drucks - E-P-Additive-enthalten.

9. Verwendung nach Ansprüchen 1 bis 8, dadurch gekennzeichnet, daß als Fettalkoholkomponenten Gemische geradkettiger olefinisch ungesättigter Fettalkohole des Bereichs C_{16/18} und/oder Guerbet-Alkohole des Bereichs C₁₆₋₂₀ eingesetzt werden.

10. Verwendung nach Ansprüchen 1 bis 9, dadurch gekennzeichnet, daß bei Raumtemperatur fließfähige Fettalkohole beziehungsweise Fettalkohol/Ester-Abmischungen eingesetzt werden.

## Claims

1. The use of linear and/or branched fatty alcohols containing at least 12 carbon atoms in the molecule and mixtures thereof with carboxylic acid esters as a lubricating additive in water-based alkali metal silicate drilling fluids for use in geological exploration by drilling.

2. The use claimed in claim 1, characterized in that C₁₂₋₃₀ and preferably C₁₂₋₂₄ fatty alcohols are used.

3. The use claimed in claims 1 and 2, characterized in that mono- and/or polyolefinically unsaturated C₁₆₋₂₄ fatty alcohols and/or C₁₂₋₂₀ Guerbet alcohols are used.

4. The use claimed in claims 1 to 3, characterized in that fatty alcohols flowable at room temperature or correspondingly flowable mixtures of fatty alcohols with carboxylic acid esters are used.

5. The use claimed in claims 1 to 4, characterized in that esters of mono- and/or polybasic carboxylic acids with mono- and/or polyhydric alcohols are used together with the fatty alcohols, corresponding esters of linear, optionally olefinically unsaturated monocarboxylic acid esters in the fatty range, more particularly C₁₂₋₂₄ and preferably C₁₄₋₂₀, being preferred.

6. The use claimed in claims 1 to 5, characterized in that mixtures of the linear and/or branched fatty alcohols with esters of which the ester content is no more than 80% by weight and preferably no more than 60% by weight (based on the sum of fatty alcohol and ester), ester contents in the mixture of 25 to 55% by weight optionally being preferable, are used.

7. The use claimed in claims 1 to 6, characterized in that esters of monocarboxylic acids in the fatty range with monohydric alcohols likewise in the fatty range - preferably C₁₂₋₂₀ in either case - and/or esters of these fatty acids with lower polyhydric alcohols containing up to 6 carbon atoms and up to 6 hydroxyl groups, preferably corresponding triglycerides, are used together with the fatty alcohols.

8. The use claimed in claims 1 to 7, characterized in that mixtures additionally containing additives for use at extreme pressures (EP additives) are used.

9. The use claimed in claims 1 to 8, characterized in that mixtures of linear, olefinically unsaturated C_{16/18} fatty alcohols and/or C₁₆₋₂₀ Guerbet alcohols are used as the fatty alcohol components.

10. The use claimed in claims 1 to 9, characterized in that fatty alcohols or fatty alcohol/ester mixtures flowable at room temperature are used.

## Revendications

1. Utilisation d'alcools gras à chaîne droite et/ou ramifiés ayant au moins 12 atomes de carbone par molécule, et leurs mélanges avec des esters carboxyliques, en tant qu'additif à effet lubrifiant dans des systèmes de fluides de forage à base aqueuse, contenant des silicates alcalins, pour leur utilisation dans l'exploration du sous-sol par forage.

2. Utilisation selon la revendication 1,
caractérisée en ce qu'
on utilise des alcools gras dans la plage de C₁₂₋₃₀.

3. Utilisation selon l'une quelconque des revendications 1 à 2,
caractérisée en ce qu'
on utilise des alcools gras à une et/ou plusieurs insaturations oléfiniques, dans la plage de C₁₆₋₂₄, et/ou des alcools de Guerbet dans la plage de C₁₂₋₂₀.

4. Utilisation selon l'une quelconque des revendications 1 à 3,
caractérisée en ce qu'
on utilise des alcools gras fluides aux environs de la température ambiante, ou des mélanges fluides correspondants d'alcools gras avec des esters d'acides carboxyliques.

5. Utilisation selon l'une quelconque des revendications 1 à 4,
caractérisée en ce qu'
on utilise conjointement avec les alcools gras des esters d'acides mono- et/ou polycarboxyliques avec des alcools mono- et/ou polyhydroxylés, les esters correspondants d'acides monocarboxyliques à chaîne droite, éventuellement à insaturation oléfinique, de la classe des acides gras étant préférés.

6. Utilisation selon l'une quelconque des revendications 1 à 5,
caractérisée en ce qu'
on utilise des mélanges des alcools gras à chaîne droite et/ou ramifiés avec des esters, dont la teneur en ester n'excède pas 80 % en poids, par rapport à la somme de l'alcool gras et de l'ester.

7. Utilisation selon l'une quelconque des revendications 1 à 6,
caractérisée en ce que
conjointement avec les alcools gras, on utilise des esters d'acides monocarboxyliques appartenant au groupe des acides gras, avec des alcools monofonctionnels appartement également au groupe des alcools gras, et/ou des esters de ces acides gras avec des alcools polyhydroxylés inférieurs ayant jusqu'à 6 atomes de carbone et jusqu'à 6 groupes hydroxyle.

8. Utilisation selon l'une quelconque des revendications 1 à 7,
caractérisée en ce qu'
on utilise des mélanges de substances qui contiennent en outre des additifs pour le domaine d'utilisation des pressions extrêmes - additifs P-E.

9. Utilisation selon l'une quelconque des revendications 1 à 8,
caractérisée en ce qu'
on utilise comme composants de type alcool gras des mélanges d'alcools gras à chaîne droite, à insaturation oléfinique, dans la plage de C_{16/18} et/ou des alcools de Guerbet dans la plage de C₁₆₋₂₀.

10. Utilisation selon l'une quelconque des revendications 1 à 9,
caractérisée en ce qu'
on utilise des alcools gras ou des mélanges d'alcools gras/esters, fluides à la température ambiante.
